# EUROPEAN PATENT SPECIFICATION

(11) **EP 2 054 239 B1**
(45) Date of publication and mention of the grant of the patent: **28.09.2011**
(21) Application number: 07789294.1
(22) Date of filing: 22.08.2007
(51) Int. Cl.: B42D 15/00

(54) **CREASING METHOD**
RILLVERFAHREN
PROCÉDÉ DE RAINAGE

(30) Priority: 23.08.2006 GB 0616754
(43) Date of publication of application: 06.05.2009
(73) Proprietor: Powell, Lyndon, Bridgend CF32 9TD South Wales (GB)
(72) Inventor: Powell, Lyndon, Bridgend CF32 9TD South Wales (GB)
(74) Representative: Whitfield, Gillian Janette
(86) International application number: PCT/GB2007/003202
(87) International publication number: WO 2008/023175

(56) References cited:
- EP-A- 0 156 325
- US-A1- 2006 116 263

## Description

### Background to the invention

The present invention relates to a foldable product and in particular to a foldable paper-based product and a method of creasing. The present invention also relates to a template for a paper-based structure and in particular such a template using said method of creasing.

In conventional printing methods, die-cut products, such as literature folders, CD envelopes and other printed items, are manufactured by first printing the board to be used. The printed board is then put through a die cutting machine to add any cuts or creases to the board which are required for the assembly, use or visual appearance of the final product. The creases which are applied to the surface of the product create a depression in one side of the product and a corresponding projection or ridge in the opposing side of the material of the product where the material has been distorted to introduce a region which will facilitate the subsequent folding of the product.

As significant time and expense is involved in setting up machine print runs using lithographic printing technology, and also in the setting up of the die cutting machine, such a process is typically only practical for long print runs, for example print runs of 1000 copies or more.

However, often shorter print runs may be desired in which case, the above process is not cost effective and typically a consumer will have to accept a longer print-run and incur more expense and printed copies that are wanted, just to obtain the small number of copies which were originally desired. Not only is this incurring unnecessary expense, it also leads to wastage as many of the unwanted printed copies will ultimately be disposed of by the consumer.

One solution to the expense and long-run requirement of traditional lithographic printing is to use modem digital printing techniques, which allow short runs of printing to take place as this technique does not involve the set-up times and costs of traditional lithographic printing,

However, whilst this overcomes the printing problem, there still remains the time and therefore cost involved with setting up the die-cutting machine, such costs making only long print runs economical to undergo die-cutting.

US-A1-2006/0116263 also discloses the state of the art.

There is therefore a need for a solution to these prior art problems which allows printing and die-cutting to be available as an economically practical option for use with small print runs.

One possibility would be to die-cut templates in large numbers thus providing economy of scale and then printing on the pre-cut templates. However, the die-cutting step introduces creases to the surface of the template (to allow subsequent folding of the product) and printing across such crease lines results in poor print reproduction. If the product is designed such that the crease lines are merely indicated rather than being present at the surface of the product, the resulting folding of the product is often inaccurate and also results in white lines appearing at the outer edge of each fold, thus interfering with the visual appearance of any printed images or text which spans the fold line.

### Summary of the Invention

The present invention seeks to address the problems of the prior art.

Accordingly, a first aspect of the present invention provides a resiliently foldable paper-based product comprising a sheet having a first surface and an opposite under-surface, the first surface comprising a substantially planar printable surface and the under-surface comprising a substantially planar surface with a crease indentation.

Thus, there is no corresponding shape irregularity or surface interruption at the first surface from the crease indentation on the under-surface which is visible to the naked eye.

In some instances, it is possible that the portion of the printable surface corresponding to the crease indentation on the under-surface may demonstrate slightly altered light reflective properties when viewed from certain angles in some light environments. However, no surface irregularities have been created which alter the contour of the substantially planar surface of the printable surface when viewed by eye.

Printing may then take place on the printable surface without any distortion of the printed image or text as the printable surface has no interruptions in its surface visible to the naked eye caused by the presence of crease lines introduced prior to printing. Rather, the crease lines have been introduced prior to printing, but are present only on the under-surface where they have no impact on the quality of the printed image applied to the printed surface.

The depth of the crease indentation may vary. For example, in one embodiment, the depth of the crease indentation is up to 85 % of the thickness of the sheet. The depth of the crease indentation may be in the range of around 10 % to around 80 % of the thickness of the sheet. However, preferably the depth of the crease indentation is in the range of around 20 % to around 70 % of the thickness of the sheet. More preferably, the depth of the crease indentation is in the range of around 55 % to 65 % of the thickness of the sheet.

The sheet may comprise any suitable material onto which printed images and/or text may be applied, including suitable paper-based or plastics-based material or any other suitable material to which printed images may be applied or to which a coating may be applied to which a printed image can then be applied. Paper-based materials include, but are not limited to paper, card and cardboard.

In one embodiment, the crease indentation extends from a first edge of the under-surface to a second edge of the under-surface without interruption. This allows subsequent folding of the sheet completely across one of its dimensions, such as would be used when creating a brochure with a front and back cover.

Alternatively, the crease may not extend from the first edge to the second edge of the under-surface without interruption. This is the type of arrangement which may be used when creating three dimensional structures such as packaging for toys and Easter eggs and the like where, for example, the crease is semi-circular and extends from a first position at the first edge across a portion of the under-surface and back round to a second distinct position at the first edge.

A foldable paper-based product in accordance with the first aspect of the present invention may be a template for a folded structure, such as a brochure, greetings card, packaging structure, sculpture or any other structure desired by the user and utilising the crease indentations for folding of the sheet to form all or part of the folded structure.

A further aspect of the present invention provides a method of creasing comprising the steps of:
a. providing a sheet of resiliently foldable paper-based material having a first substantially planar printable surface and a substantially planar under-surface;
b. supporting the sheet on a substantially planar surface with the printable surface adjacent the substantially planar surface; and
c. creating a crease indentation on the under-surface whilst bracing the sheet against the substantially planar surface.

A resiliently foldable product according to a first aspect of the present invention may comprise a template for a paper-based structure such as a form for a box or folder or brochure cover or container or the like.

### Brief Description of the Drawings

An embodiment of the invention will now be described, by way of example only, and with reference to the accompanying drawings, in which:
Figure 1 is a perspective view of a first embodiment of a foldable product in accordance with the present invention;
Figure 2 is a side view of the embodiment of figure 1;
Figure 3 is a plan view from above of the embodiment of figure 1;
Figure 4 is a plan view from below of the embodiment of figure 1; and
Figure 5 is a plan view from above of a first embodiment of a template in accordance with a further aspect of the present invention.

### Detailed Description of the Invention

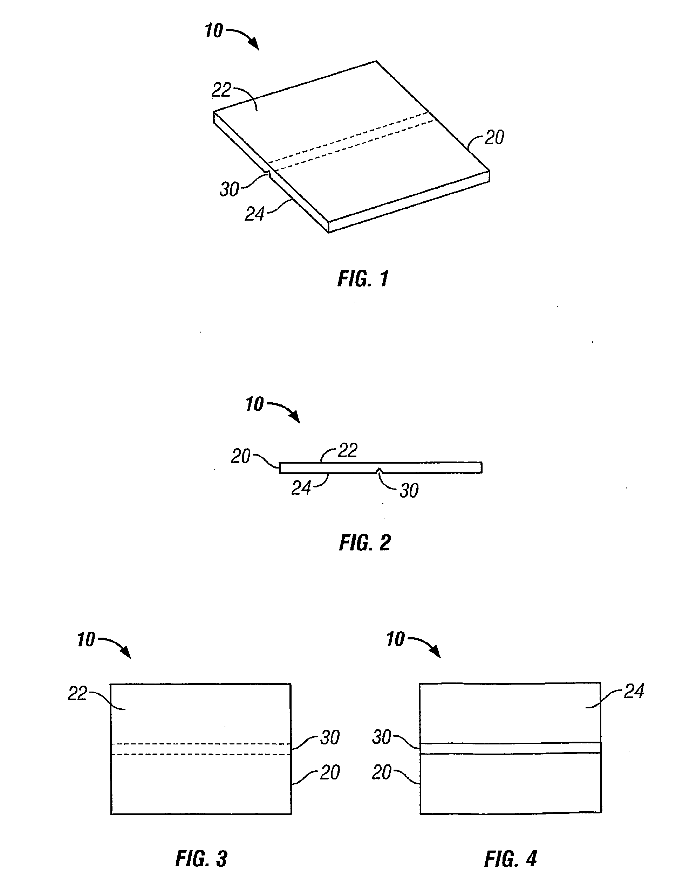

Figures 1 to 4 show a first embodiment of a foldable product 10 in accordance with a first aspect of the present invention.

Foldable product 10 comprises a sheet 20 having a printable surface 22 upon which a printed image may be applied, for example by digital print technology or by any other suitable printing technique known to the skilled person. Sheet 20 has a further surface, under-surface 24, opposing printable surface 22.

In figures 1 to 4, product 10 is shown with a crease indentation 30 at the surface of sheet 20. Crease indentation 30 extends from under-surface 24 through the thickness of sheet 20 towards printable surface 22, but without causing surface irregularities at printable surface 22. Thus, printable surface 22 has a regular substantially planar surface without surface irregularities resulting from crease indentation 30 at under-surface 24. In this way, images and/or text may be applied to printable surface 22 without risk of any distortion of the image or text as a result of irregularities from crease indentation 30.

The position of crease indentation 30 at under-surface 24 is shown in figures 1 and 3 as two dotted lines indicating the edges of crease indentation 30. In figure 4, which is a view of the under-surface 24, the edge of crease indentation 30 are shown as solid lines.

The crease indentation may have any desired shape, although a shallow and rounded contour is preferred when seeking to avoid creating any surface disruption of the printable surface.

Foldable product 10 may be passed through a printing operation to provide a printed image or text to the printable surface 22 and the resulting printed product folded along crease indentation 30 to provide a printed folder for subsequent use by a user, for example, to contain documents and/or promotional items.

Furthermore, as the foldable product may be produced in large numbers, the die cutting process is cost-effective. Thus, a print-run may be short if desired as just the selected number of foldable products may be selected and printed, for example using digital printing techniques in the case of a short print run, to produce the desired number of printed product for the user's intended purpose.

Crease indentation 30 is produced by applying pressure to the under-surface 24 of sheet 20 using an appropriately shaped die, whilst supporting printable surface 22 of sheet 20 against a planar surface thereby allowing the creation of crease indentation 30 using pressure to compress a selected portion of under-surface 24 without deformation of printable surface 22 of sheet 20.

It is important that undesirable deformation at the printable surface 22 is minimised or avoided as such irregularities are likely to compromise the print quality of the subsequently printed image or text if printed over the crease indentation irregularity.

It will be appreciated that although figures 1 to 4 show a foldable product 10 with a single crease indentation 30, multiple crease indentations 30 may be provided at under-surface 24 of sheet 20 if desired to allow sheet 20 to be folded in any desired manner after printing images and/or text on printable surface 22.

In order to make short print runs even more economically viable, the foldable product 10 may take a specific form which allows printed product 10 to be simply passed through a conventional printer such as a conventional laser printer or the like, to apply printed images and/or text to the printable surface 22.

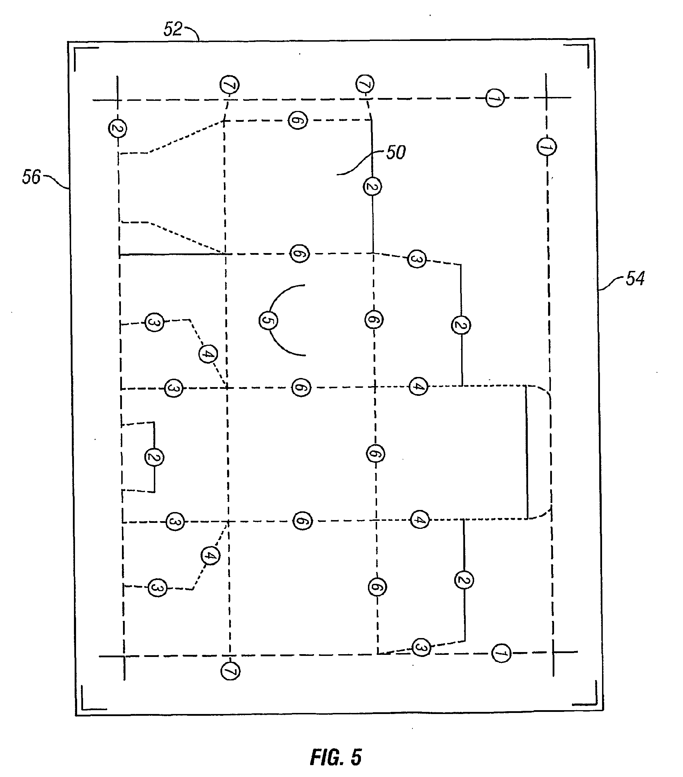

Figure 5 shows such a pre-die cut template 50 which is intended to be folded after printing into a box-like structure.

The template 50 comprises a part of a substantially planar sheet 52 having at least two opposing parallel edges 54, 56 such that the template 50 may be easily received by a printing machine such as a laser printer or the like and guided into the machine using conventional edge guides located at the document receiving inlet of conventional printing machines.

Many cuts and creases need to be made to provide a template 50 which can be released from sheet 52 after printing so that the template 50 may be folded into the desired structure. However, it is important that the cuts are presented correctly on sheet 52 to avoid cut or burred edges being caught on the internal mechanism of the printing machine and to avoid excessive wear and tear on the internal mechanism of the printing machine over time. In addition, it is important that some of the desired cuts are not presented as cuts on sheet 52 so that sheet 52 can retain the template 50 as a part thereof until the printing stage has taken place.

Using the numbers shown in figure 5, the rules relating to cuts and creases for the embodiment shown are as follows:
- All outermost straight external template cuts 1 (i.e. outermost when in flat sheet form as shown in figure 5) are to be left uncut or micro perforated on sheet 50;
- All other cuts 2 in the direction of travel of sheet 52 through the printing machine are fully cut except when the strength of the sheet is an issue, in which case cuts 2 may be left un-cut for subsequent guillotining or may be micro-perforated on sheet 50;
- All non-external cuts 3 which are non-visible in the final folded product and which are not in the direction of travel of sheet 52 through the printing machine are to be perforated or micro-perforated;
- Any straight cuts 4 which are visible in the final folded product and which are not in the direction of travel of sheet 52 through the printing machine are to be perforated and are preferably micro-perforated so that when the portions of template 50 are separated at perforations 4 the cut edges will appear visually tidy;
- Any curved cuts 5 which are visible in the final folded product are to be fully cut or when required micro perforated;
- All crease indentations 6 are to be applied as previously discussed and at a pressure that causes sufficient indentation to form a crease in the underside of the sheet 50 (i.e. the surface opposing the surface to which the printed image and/or text is to be applied) but which will have no detrimental effect on the printing surface; and
- All crease indentations, perforations and cuts 7 that run to the outer edges of the template 50 will extend beyond the external cut marks of the template edges.

In use, a user would select the sheet corresponding to the desired folded structure, pass the sheet through a suitable printing machine such that the printed image and/or text is applied to the surface of the sheet opposing the surface on which the crease indentations arc present. Once the sheet has been printed, the user would simply cut off the external marked margins of the sheet, for example using a simple guillotining procedure, followed by creating separations at the perforated regions in order to produce a foldable product. The foldable product can then simply be folded into the desired folded structure.

Thus, the present invention allows the production of printed folded structures using small print runs without the associated costs and time input of conventional production methods.

## Claims

1. A resiliently foldable paper-based product comprising a sheet having a substantially planar printable surface and an opposite under-surface, the under-surface comprising at least two substantially planar faces separated by a crease indentation.

2. A resiliently foldable paper-based product in accordance with Claim I, wherein the depth of the crease indentation is up to 85 % of the thickness of the sheet.

3. A resiliently foldable paper-based product in accordance with Claim 2, wherein the depth of the crease indentation is in the range of around 10 % to around 80 % of the thickness of the sheet.

4. A resiliently foldable paper-based product in accordance with Claim 3, wherein the depth of the crease indentation is in the range of around 20 % to around 70 % of the thickness of the sheet.

5. A resiliently foldable paper-based product in accordance with Claim 4, wherein the depth of the crease indentation is in the range of around 55 % to around 65 % of the thickness of the sheet.

6. A resiliently foldable paper-based product in accordance with any preceding Claim, wherein the crease indentation extends from a first edge of the under-surface to a second edge of the under-surface without interruption.

7. A resiliently foldable paper-based product in accordance with any preceding Claim, wherein the foldable paper-based product is a template for a folded structure.

8. A method of creasing comprising the steps of:
a. providing a sheet of resiliently foldable paper-based material having a first substantially planar printable surface and a substantially planar under-surface;
b. supporting the sheet on a substantially planar surface with the printable surface adjacent the substantially planar surface; and
c. creating a crease indentation on the under-surface whilst bracing the sheet against the substantially planar surface.

## Patentansprüche

1. Elastisch faltbares, auf Papier basierendes Produkt, das einen Bogen mit einer im Wesentlichen ebenen bedruckbaren Oberfläche und einer gegenüberliegenden Unterseite umfasst, wobei die Unterseite mindestens zwei im Wesentlichen ebene Flächen umfasst, die durch eine Falzkerbe getrennt sind.

2. Elastisch faltbares, auf Papier basierendes Produkt nach Anspruch 1, wobei die Tiefe der Falzkerbe bis zu 85 % der Dicke des Bogens beträgt.

3. Elastisch faltbares, auf Papier basierendes Produkt nach Anspruch 2, wobei die Tiefe der Falzkerbe im Bereich von etwa 10 % bis etwa 80 % der Dicke des Bogens liegt.

4. Elastisch faltbares, auf Papier basierendes Produkt nach Anspruch 3, wobei die Tiefe der Falzkerbe im Bereich von etwa 20 % bis etwa 70 % der Dicke des Bogens liegt.

5. Elastisch faltbares, auf Papier basierendes Produkt nach Anspruch 4, wobei die Tiefe der Falzkerbe im Bereich von etwa 55 % bis etwa 65 % der Dicke des Bogens liegt.

6. Elastisch faltbares, auf Papier basierendes Produkt nach einem der vorhergehenden Ansprüche, wobei die Falzkerbe ohne Unterbrechung von einem ersten Rand der Unterseite zu einem zweiten Rand der Unterseite verläuft.

7. Elastisch faltbares, auf Papier basierendes Produkt nach einem der vorhergehenden Ansprüche, wobei das faltbare. auf Papier basierende Produkt eine Vorlage für eine gefaltete Struktur ist.

8. Falzverfahren, folgende Schritte umfassend:
a. Bereitstellen eines Bogens elastisch faltbaren, auf Papier basierenden Materials mit einer ersten, im Wesentlichen ebenen, bedruckbaren Oberfläche und einer im Wesentlichen ebenen Unterseite,
b. Auflegen des Bogens auf eine im Wesentlichen ebene Oberfläche, wobei die bedruckbare Oberfläche an die im Wesentlichen ebene Oberfläche angrenzt, und
c. Erzeugen einer Falzkerbe auf der Unterseite, während der Bogen auf der im Wesentlichen ebenen Oberfläche verspannt ist.

## Revendications

1. Produit élastique pliable à base de papier comprenant une feuille présentant une surface imprimable sensiblement plane et une sous-surface opposée, la sous-surface comprenant au moins deux faces sensiblement planes séparées par un pli d'indentation.

2. Produit élastique pliable à base de papier selon la revendication 1, dans lequel la profondeur du pli d'indentation est égale à 85 % au plus de l'épaisseur de la feuille.

3. Produit élastique pliable à base de papier selon la revendication 2, dans lequel la profondeur du pli d'indentation se trouve dans la plage comprise entre environ 10 % et environ 80 % de l'épaisseur de la feuille.

4. Produit élastique pliable à base de papier selon la revendication 3, dans lequel la profondeur du pli d'indentation se trouve dans la plage comprise entre environ 20 % et environ 70 % de l'épaisseur de la feuille.

5. Produit élastique pliable à base de papier selon la revendication 4, dans lequel la profondeur du pli d'indentation se trouve dans la plage comprise entre environ 55 % et environ 65 % de l'épaisseur de la feuille.

6. Produit élastique pliable à base de papier selon l'une quelconque des revendications précédentes, dans lequel le pli d'indentation s'étend à partir d'un premier bord de la sous-surface jusqu'à un second bord de la sous-surface sans interruption.

7. Produit élastique pliable à base de papier selon l'une quelconque des revendications précédentes, dans lequel le produit pliable à base de papier est un modèle pour une structure pliée.

8. Procédé de pliage, comprenant les étapes suivantes :
a. fourniture d'un matériau élastique pliable à base de papier présentant une première surface imprimable sensiblement plane et une sous-surface sensiblement plane ;
b. pose de la feuille sur une surface sensiblement plane, la surface imprimable étant adjacente à la surface sensiblement plane ; et
c. création d'un pli d'indentation sur la sous-surface tout en calant la feuille contre la surface sensiblement plane.
